Europäisches Patentamt

European Patent Office

Office européen des brevets

(19)

(11) Veröffentlichungsnummer: **0 234 028 B1**

# EUROPÄISCHE PATENTSCHRIFT

(45) Veröffentlichungstag der Patentschrift: 24.07.91

(21) Anmeldenummer: 86117370.6

(22) Anmeldetag: 12.12.86

(51) Int. Cl.⁵: **C09J 5/00, C08J 5/12, B60R 13/02**

(54) **Verfahren zum Beziehen eines Innenausstattungsteiles.**

(30) Priorität: 27.02.86 DE 3606375

(43) Veröffentlichungstag der Anmeldung:
02.09.87 Patentblatt 87/36

(45) Bekanntmachung des Hinweises auf die
Patenterteilung:
24.07.91 Patentblatt 91/30

(84) Benannte Vertragsstaaten:
DE FR GB IT SE

(56) Entgegenhaltungen:
DE-A- 3 438 489
US-A- 2 484 937

(73) Patentinhaber: **Dr.Ing.h.c. F. Porsche Aktiengesellschaft**
**Porschestrasse 42**
**W-7000 Stuttgart 40(DE)**

(72) Erfinder: **Braeuer, Axel, Dipl.-Ing. FH**
**Deisenbergstrasse 21**
**W-8702 Guentersleben(DE)**
Erfinder: **Schray, Eugen**
**Theodor Storm Str. 18**
**W 7141 Oberriexingen(DE)**
Erfinder: **Wagner, Dieter Dipl.Ing.FH**
**Grossmoltenstr. 28**
**W 7141 Oberriexingen(DE)**

Rank Xerox (UK) Business Services

## Beschreibung

Die Erfindung bezieht sich auf ein Verfahren zum Beziehen eines Innenausstattungsteiles, insbesondere für Fahrzeuge, mit einer Lederschicht, die unter Vermittlung eines Klebers auf eine Lage aus PU, ABS- oder PVC-Folie aufgebracht wird.

Es ist allgemein bekannt, Innenausstattungsteile eines Fahrzeuges mit einem Bezug aus ABS- oder PVC-Folie, wie z. B. das Armaturenbrett, die Türverkleidungen, die Mittelkonsole oder den Dachhimmel, nachträglich mit einer Lederschicht zu versehen, um dem Fahrgastraum ein qualitativ hochwertiges Aussehen zu verleihen. Bisher wurde hierfür folgendes, nicht publiziertes Verfahren angewendet: Nach dem Reinigen des Bezuges des Innenausstattungsteiles wurde auf dieses und auf die Rückseite der Lederschicht ein Kontaktkleber (Neoprenkleber) mittels eines Pinsels aufgetragen; nach dem Ablüften des Klebers wurde die Lederschicht von Hand auf das Innenausstattungsteil aufgebracht.

Diesem Verfahren haftet der Nachteil an, daß bedingt durch den Pinselauftrag des Klebers auf die Lederschicht eine ungleichmäßige Klebeschichtdicke entsteht und daß insbesondere in Zonen einer großen Klebeschichtdicke das Lösungsmittel des Klebers die Farbpigmente des Leders angreift, wodurch auf der sichtbaren Lederoberseite bleibende Flecken entstehen. Außerdem sind an der sichtbaren Lederoberfläche keine Vorkehrungen getroffen, um eine Verschmutzung oder Beschädigung beim Verkleben der Lederschicht zu vermeiden. Klebstoffreste auf der sichtbaren Lederoberseite lassen sich jedoch nicht mehr entfernen. Darüber hinaus kann es vorkommen, daß sich bei diesem Verfahren die Lederschicht bei relativ hoher Temperatureinwirkung (ca. 130°) von der ABS- oder PVC-Folienschicht löst, da die vorhandenen Kontaktkleber (Neoprenkleber) für eine derart hohe Temperatur nur kurzzeitig geeignet sind.

Aufgabe der Erfindung ist es, ein solches Verfahren zu schaffen, daß das nachträgliche Beziehen eines Innenausstattungsteiles mit einer Lederschicht in einfacher Weise erfolgen kann, keine Beschädigungen oder Verschmutzungen an der sichtbaren Lederoberseite hervorgerufen werden und daß sich die Lederschicht auch bei langzeitiger hoher Temperatureinwirkung nicht von der darunterliegenden Lage des Innenausstattungsteiles löst.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die einzelnen Verfahrensschritte auch bei langzeitiger hoher Temperatureinwirkung eine einwandfreie Befestigung der Lederschicht am Innenausstattungsteil gegeben ist und daß ferner Beschädigungen und Verschmutzungen der sichtbaren Lederoberfläche vermieden werden.

Durch die Wärmebehandlung der Lederschicht vor dem Klebevorgang wird dieser die vorhandene Feuchtigkeit (Wasser) entzogen und damit erreicht, daß die Lederschicht nicht erst nach erfolgter Verklebung schrumpft, was eine Zerstörung der Klebeschicht zur Folge hätte.

Der auf die dekorative Lederoberseite aufgebrachte wasserlösliche Schutzfilm bewirkt, daß Klebstoffreste beim Aufkleben der Lederschicht nicht unmittelbar mit der Lederoberseite, sondern nur mit dem Schutzfilm in Berührung kommen und deshalb in einfacher Weise wieder entfernbar sind. Durch das Aufbringen des Klebstoffes auf die Rückseite des Leders im Sprühverfahren wird ein relativ gleichmäßiger und dünner Kleberauftrag auf das Leder erzielt. Ferner verflüchtigt sich ein Großteil des im Kleber enthaltenen Lösungsmittels, d. h., die Menge an Lösungsmittel im aufgebrachten Kleber ist wesentlich geringer als bei einem Pinselauftrag, obwohl der sprühfähige Kleber wesentlich mehr Lösungmittel enthält als der streichfähige Kleber. Nach erfolgter Verklebung wird die Lederoberseite mit einem feuchten Schwamm oder dergleichen gereinigt und somit der Schutzfilm und eventuelle Verschmutzungen problemlos entfernt.

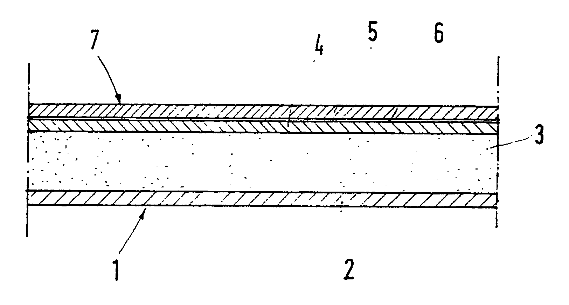

Ein in der Zeichnung dargestelltes Ausführungsbeispiel der Erfindung wird im folgenden näher erläutert.

Ein Innenausstattungsteil 1 für ein Fahrzeug, wie z. B. eine Türverkleidung, ein Armaturenbrett oder dergleichen umfaßt ein Trägerteil 2, eine nachgiebige Polsterschicht 3 und eine dekorative Lage 4 aus einer ABS- oder PVC-Folie oder aus Polyurethan.

Zum nachträglichen Beziehen des Innenausstattungsteiles 1 mit einer Lederschicht 5 unter Vermittlung eines Klebers 6 wird folgendes Verfahren angewendet: Die Lederschicht 5 wird einer Wärmebehandlung unterzogen. Hierzu wird die Lederschicht 5 in einen Trockenofen gegeben und etwa 4 bis 6 Stunden einer Temperatur von 100 bis 110° C ausgesetzt. Dadurch wird der Lederschicht 5 die im Anlieferungszustand noch vorhandene Feuchtigkeit (Wassergehalt etwa 8 bis 13 %) entzogen. Danach wird auf die dekorative Lederoberseite 7 ein wasserlöslicher Schutzfilm aufgebracht. Dies erfolgt vorzugsweise durch Aufsprühen. Als Schutzfilm eignet sich beispielsweise Polyvinylalkohol.

Mit einem Lösungsmittel wird anschließend der zu beziehende Bereich des Innenausstattungsteiles 1 gereinigt, bevor mittels eines Pinsels der Kleber aufgebracht wird. Als Kleber wird ein Polyurethankleber mit einem Zusatz von etwa 10 % Härter (Vernetzer) verwendet.

Für die Rückseite der Lederschicht 5 wird ein chemisch gleichartiger Kleber wie für das Innenausstattungsteil 1 angewandt, der jedoch einen wesentlich größeren Lösungsmittelanteil aufweist und sprühfähig ist. Der auf die Lederschicht 5 mittels einer Spritzpistole aufgesprühte Kleber weist eine Viskosität von etwa 690 mPas auf, wogegen die Viskosität des streichfähigen Klebers etwa 4800 mPas beträgt. Beide Kleber läßt man kurz ablüften, bevor die Lederschicht 5 auf das Innenausstattungsteil 1 aufgebracht wird. Nach Beendigung des Klebeverfahrens wird der wasserlösliche Schutzfilm auf der Lederoberseite, beispielsweise durch einen in Wasser getränkten Schwamm wieder entfernt. Das Innenausstattungsteil 1 wird zum Aushärten des Klebers aufgehängt, wobei die Aushärtezeit bei einer Raumtemperatur von 20° C max. 48 Stunden beträgt. Danach kann das Innenausstattungsteil 1 in das Fahrzeug eingebaut werden, wobei sich die Lederschicht 5 auch bei längerer Temperatureinwirkung von etwa 130° C nicht vom Innenausstattungsteil 1 löst.

## Patentansprüche

1. Verfahren zum Beziehen eines Innenausstattungsteiles, insbesondere für Fahrzeuge, mit einer Lederschicht, die unter Vermittlung eines Klebers auf eine Lage aus PU, ABS- oder PVC-Folie aufgebracht wird, gekennzeichnet durch folgende Verfahrensschritte:
   a) Die Lederschicht wird einer Wärmebehandlung unterzogen;
   b) Auf die dekorative Lederoberseite wird ein wasserlöslicher Schutzfilm aufgebracht;
   c) Der zu beziehende Bereich des Innenausstattungsteiles wird mittels eines Lösungsmittels gereinigt;
   d) Auf den gereinigten Bereich des Innenausstattungsteiles wird mittels eines Pinsels ein Kleber aufgetragen;
   e) Auf die Rückseite der Lederschicht wird ein Kleber aufgesprüht;
   f) Die beiden Kleber auf dem Innenausstattungsteil und der Lederschicht werden abgelüftet;
   g) Die Lederschicht wird auf das Innenausstattungsteil aufgebracht;
   h) Der wasserlösliche Schutzfilm auf der dekorativen Lederoberseite wird entfernt;
   i) Der Kleber wird bei Raumtemperatur (20° C) etwa 48 Stunden ausgehärtet.

2. Verfahren nach Anspruch 1, dadurch gekennzeichnet, daß die Lederschicht in einem Trockenofen etwa 4 bis 6 Stunden einer Temperatur von 100 bis 110° C ausgesetzt wird.

3. Verfahren nach Anspruch 1, dadurch gekennzeichnet, daß als Schutzfilm Polyvinylalkohol verwendet wird.

4. Verfahren nach Anspruch 1, dadurch gekennzeichnet, daß für das Innenausstattungsteil und die Lederschicht chemisch gleichartige Kleber auf Polyurethanbasis mit einem Zusatz von etwa 10° Härter (Vernetzer) verwendet werden, wobei der Klebstoff für das Innenausstattungsteil wesentlich weniger Lösungmittel enthält als der Klebstoff für die Lederschicht.

5. Verfahren nach Anspruch 1, dadurch gekennzeichnet, daß der Klebstoff für das Innenausstattungsteil eine Viskosität von etwa 4800 mPas aufweist, wogegen die Viskosität des sprühfähigen Klebstoffes etwa 690 mPas beträgt.

6. Verfahren nach den Ansprüchen 1 und 3, dadurch gekennzeichnet, daß der wasserlösliche Schutzfilm durch Sprühen aufgebracht wird.

## Claims

1. A method of lining an inner trimming part, in particular for vehicles, with a covering of leather which is applied by means of an adhesive onto a layer of PU, ABS or PVC film, characterized by the following method steps:
   a) the leather covering is subjected to a heat treatment;
   b) a water-soluble protective film is applied to the decorative top side of the leather;
   c) the area of the inner trimming part to be lined is cleaned by means of a solvent;
   d) an adhesive is applied by means of a brush to the cleaned area of the inner trimming part;
   e) an adhesive is sprayed onto the rear of the leather covering;
   f) the two adhesives on the inner trimming part and the leather covering are exposed to the air;
   g) the leather covering is applied to the inner trimming part;
   h) the water-soluble protective film on the decorative top side of the leather is removed;
   i) the adhesive is allowed to set for about 48 hours at room temperature (20° C).

2. A method according to Claim 1, characterized in that the leather covering is subjected to a temperature of from 100 to 110° C in a drying oven for about 4 to 6 hours.

3. A method according to Claim 1, characterized in that polyvinyl alcohol is used as the protective film.

4. A method according to Claim 1, characterized in that chemically similar adhesives based on polyurethane with an addition of substantially 10% of setting agent (cross-linking agent) are used for the inner trimming part and the leather covering, the adhesive for the inner trimming part containing substantially less solvent than the adhesive for the leather covering.

5. A method according to Claim 1, characterized in that the adhesive for the inner trimming part has a viscosity of about 4800 mPas, whereas the viscosity of the sprayable adhesive amounts to about 690 mPas.

6. A method according to Claims 1 and 3, characterized in that the water-soluble protective film is applied by spraying.

**Revendications**

1. Procédé de revêtement d'un élément de garniture intérieure, en particulier pour véhicules automobiles, avec une couche en cuir, qui est appliquée au moyen d'un adhésif sur un support en feuille de polyuréthane, ABS ou PVC, caractérisé par les étapes de procédé suivantes :

   a) la couche en cuir est soumise à un traitement thermique;

   b) un film protecteur soluble dans l'eau est appliqué sur la face supérieure décorative du cuir;

   c) la zone à garnir de la partie d'équipement intérieur est nettoyée au moyen d'un solvant;

   d) un adhésif est appliqué au pinceau sur la zone nettoyée de la partie d'équipement intérieur;

   e) un adhésif est pulvérisé sur la face arrière de la couche en cuir;

   f) les deux adhésifs, situés sur la partie d'équipement intérieure et sur la couche en cuir, sont aérés;

   g) la couche en cuir est appliquée sur la partie d'équipement intérieure;

   h) le film protecteur soluble dans l'eau qui est situé sur la face supérieure décorative est enlevé;

   i) l'adhésif est durci à la température ambiante (20° C) pendant environ 48 heures.

2. Procédé selon la revendication 1, caractérisé en ce que la couche en cuir est exposée dans un four de séchage pendant à peu près 4 à 6 heures, à une température de 100 à 110° C

3. Procédé selon la revendication 1, caractérisé en ce que le film de protection utilisé est de l'alcool polyvinylique.

4. Procédé selon la revendication 1, caractérisé en ce qu'on utilise, pour la partie d'équipement intérieur et la couche en cuir, un adhésif de même nature chimique, à base de polyuréthane, avec addition d'à peu près 10% de durcisseur (réticulant), l'adhésif destiné à la partie d'équipement intérieure contenant notablement moins de solvant que celui qui est destiné à la couche en cuir.

5. Procédé selon la revendication 1, caractérisé en ce que l'adhésif destiné à la partie d'équipement intérieur présente une viscosité d'à peu près 4800 mPaS, la viscosité de l'adhésif pulvérisable étant par contre d'à peu près 690 mPas.

6. Procédé selon les revendications 1 et 3, caractérisé en ce que le film protecteur soluble dans l'eau est appliqué par pulvérisation.